# EUROPÄISCHE PATENTSCHRIFT

(11) **EP 2 637 012 B1**
(45) Veröffentlichungstag und Bekanntmachung des Hinweises auf die Patenterteilung: **11.01.2017**
(21) Anmeldenummer: 13157816.3
(22) Anmeldetag: 05.03.2013
(51) Int. Cl.: B60W 50/02, G01M 17/007, B60W 30/16, B60W 50/04, G05D 1/02, B60W 30/14, B60W 30/12

(54) **Verfahren zum Testen der Funktionsfähigkeit eines in einem Testfahrzeug verbauten Fahrerassistenzsystems**
Method for testing the functionality of a driver assistance system installed in a test vehicle
Procédé destiné à tester le fonctionnement d'un système d'assistance au conducteur intégré dans un véhicule test

(30) Priorität: 07.03.2012 DE 102012004650
(43) Veröffentlichungstag der Anmeldung: 11.09.2013
(73) Patentinhaber: AUDI AG, 85045 Ingolstadt (DE)
(72) Erfinder: Breu, Alexander, 93495 Weiding (DE); Schuberth, Stefan, 85057 Ingolstadt (DE); Bulwahn, Tobias, 85049 Ingolstadt (DE); Täuber, Patrick, 91161 Hilpoltstein (DE); Wolter, Julius, 15754 Heidesee (DE)

(56) Entgegenhaltungen:
- DE-A1-102010 038 639
- DE-A1-102010 038 639
- US-A- 5 295 551
- US-A1- 2008 021 600

## Beschreibung

Die Erfindung betrifft ein Verfahren zum Testen der Funktionsfähigkeit eines in einem Testfahrzeug verbauten Fahrerassistenzsystems, das in Abhängigkeit von von Sensoren, die ein in der Umgebung des zu testenden, fahrenden Testfahrzeugs fahrendes Zielfahrzeug erfassen, gelieferten Informationen arbeitet, insbesondere eines in die Längs- oder Querführung des Kraftfahrzeugs eingreifenden Fahrerassistenzsystems.

Im Rahmen der Entwicklung und im Rahmen der Zertifizierung von Fahrerassistenzsystemen, insbesondere solchen, die in die Längs- und/oder Querführung eingreifen, gibt es eine Reihe definierter, vorgeschriebener Testszenarien, die die Systeme erfüllen müssen. Als Fahrerassistenzsysteme, die diesen strengen Testlinien unterworfen werden, sind solche zu nennen, die der Warnung einer Längsverkehrskollision dienen, sogenannte FCW-Systeme (FCW = Forward Collision Warning), wie auch solche Systeme, die automatisch einen Bremsvorgang, häufig auch Notbremsassistent genannt, einleiten, sogenannte AEB-Systeme (AEB = Automatic Emergency Brake). Aber auch Folgesysteme, also Systeme, die einem vorausfahrenden Fahrzeug automatisch folgen und den Abstand automatisch durch Eingriffe einstellen, wie beispielsweise ACC-Systeme (ACC = Adaptive Cruise Control) fallen hierunter.

In der Druckschrift DE 10 2010 038639 wird eine Vorrichtung zum Testen eines Fahrassistenzsystems beschrieben.

Die Testvorgaben sind relativ komplex, in Zukunft ist damit zu rechnen, dass die Anzahl und die Komplexität dieser Testszenarien weiter ansteigen wird. Es werden sehr hohe Anforderungen an die Testdurchführung und die Ergebnisauswertung gestellt, insbesondere hinsichtlich der Reproduzierbarkeit und der Genauigkeit der zu fahrenden Testszenarien. Denn die Funktionsfähigkeit der Fahrerassistenzsysteme kann nur dadurch getestet werden, dass die Testfahrzeuge gefahren werden, mithin also reale Testsituationen gestellt werden. Das heißt, dass das zu testende Fahrzeug und das vorausfahrende Fahrzeug, das als potentielles, kritisches Hindernis dient, exakte, zeitlich vordefinierte Fahrtrajektorien abfahren müssen, die über die Testvorgaben genauestens definiert sind. Dies wiederum setzt voraus, dass die Fahrer der Fahrzeuge eine lange Trainingsphase benötigen und mehrere Versuche fahren müssen, bis die geforderte Anzahl an reproduzierbaren Tests absolviert wurde. Alternativ ist es möglich, die Fahrzeuge mit sehr aufwändigen, regelbaren Fahrrobotiken auszustatten, die entsprechend programmiert und unter Zuhilfenahme von zusätzlichen Maßnahmen wie entsprechenden externen Steuerungen in der Lage sind, die gewünschten Fahrprofile abzufahren.

Das heißt, dass die Durchführung der geforderten, nötigen Tests extrem aufwändig, zeitintensiv, umständlich und mit hohen Kosten verbunden ist. Insbesondere jedoch ist die Reproduzierbarkeit nicht immer in dem Maße gegeben, wie sie gefordert wird. Eine Änderung respektive Erweiterung der geforderten Tests um neue Testszenarien oder Testvariationen ist mit viel Aufwand verbunden.

Der Erfindung liegt damit das Problem zugrunde, ein Verfahren zum Test der Funktionsfähigkeit solcher Fahrerassistenzsysteme anzugeben, das gegenüber bisher bekannten verbessert ist.

Zur Lösung dieses Problems ist bei einem Verfahren der eingangs genannten Art erfindungsgemäß vorgesehen, dass das Testfahrzeug den Betrieb des Zielfahrzeugs zur gezielten Durchführung wenigstens eines definierten Fahrmanövers durch Gabe von Steuersignalen über eine drahtlose Kommunikationsverbindung zumindest teilweise steuert.

Das erfindungsgemäße Verfahren sieht vor, das Testfahrzeug, in dem das in seiner Funktionsfähigkeit zu testende Fahrerassistenzsystem verbaut ist, zur Steuerung des Zielfahrzeugs, das ein definiertes Fahrmanöver vornehmen soll, welches über die Testvorgaben vorgeschrieben ist, zu verwenden. Das heißt, dass das Testfahrzeug sozusagen das Master-Fahrzeug ist, während das Zielfahrzeug, das über das Master-Fahrzeug gesteuert wird, quasi das Slave-Fahrzeug ist. Die Datenübertragung, also die Übertragung der Steuersignale vom Testfahrzeug zum Zielfahrzeug, erfolgt drahtlos. Übermittelt werden sämtliche Steuersignale, die notwendig sind, um das Zielfahrzeug respektive dessen Aggregate (z. B. Motor, Lenkung, Bremssystem etc.) so zu steuern, damit das Zielfahrzeug die gewünschte Fahrtrajektorie abfährt, auf die dann quasi das Testfahrzeug respektive dessen Fahrerassistenzsystem reagieren muss.

Über diese Steuerung respektive die Datenkommunikation ist es somit möglich, exakt die Fahrszenarien und Fahrtrajektorien seitens des Zielfahrzeugs abzubilden, die die jeweilige Testvorgabe verlangt. Das Testfahrzeug, das beispielsweise hinter dem Zielfahrzeug fährt, kann das Zielfahrzeug derart ansteuern, dass es eine bestimmte Geschwindigkeit fährt, der das Testfahrzeug selbst mit einer bestimmten Geschwindigkeit folgt. Es kann das Zielfahrzeug zur Durchführung entsprechender, vorgegebener Beschleunigungen oder Verzögerungen ansteuern, oder, sofern möglich, zu einem Lenkeingriff ansteuern, um die Fahrspur zu ändern, etc. Über die Master-Steuerung durch das Testfahrzeug sind folglich eine Vielzahl unterschiedlicher Testszenarien abbildbar, ohne dass es hierfür entweder hoch ausgebildeten Personals bedarf, oder etwaiger Fahrroboter. Selbstverständlich werden auch Testfahrer benötigt, die die beiden Fahrzeuge aus Sicherheitsgründen bedienen, jedoch werden die Testfahrer zur Durchführung der aus den Testvorgaben vorzunehmenden Handlungen respektive Einstellung von Geschwindigkeitsprofilen, Verzögerungsprofilen etc. nicht benötigt. Vielmehr geschieht dies allein durch Steuerung des Zielfahrzeugs über das Testfahrzeug, das seinerseits natürlich gemäß der Testvorgaben entsprechende Sollparameter hinsichtlich seiner Eigengeschwindigkeit, Beschleunigung, Verzögerung und Ähnliches einregelt.

In Abhängigkeit der vom Master-Testfahrzeug gegebenen Steuersignale vollführt das Slave-Zielfahrzeug folglich ein bestimmtes Fahrmanöver, auf das das zu testende Fahrerassistenzsystem des Testfahrzeugs entsprechend reagiert. Diese Reaktion wird seitens des Testfahrzeugs aufgezeichnet und kann exakt ausgewertet werden. Auch ist ein extrem hohes Maß an Reproduzierbarkeit gegeben, da das Testszenarien quasi als automatischer Testvorgang vom Test- und Zielfahrzeug "selbst" abgefahren wird, das heißt, dass sich die gewünschten, geforderten Geschwindigkeitsprofile, Verzögerung etc. automatisch einstellen und beliebig oft wiederholen lassen. Etwaige Änderungen eines Testvorgangs sind ohne weiteres umsetzbar, es bedarf lediglich einer Änderung der Programmierung betreffend die Gabe der Steuersignale, die einerseits vom Testfahrzeug zum Zielfahrzeug gesandt werden, und die andererseits testfahrzeugseitig zu dessen eigenem Betrieb vorliegen.

Die Steuersignale, die dem Zielfahrzeug übertragen werden, werden bevorzugt in Abhängigkeit von Erfassungssignalen von im Testfahrzeug vorgesehenen Sensoren, die das Zielfahrzeug erfassen, oder von externen Sensoren, die von den Kraftfahrzeugen gelieferte Positionsdaten erfassen und verarbeiten, ermittelt. Das Testfahrzeug setzt also auf die fahrzeugeigene Sensorik respektive die Sensorikkomponenten (z. B. Frontsensorik wie Radarsensoren, Lasersensoren, Videokamera, oder die Hecksensorik mit dort vorgesehenen entsprechenden Radarsensoren und dergleichen) auf, das heißt, dass die Generierung der Steuersignale im Master-Fahrzeug für das Slave-Fahrzeug auf Basis der Sensordaten der eigenen Umfeldsensorik des Master-Fahrzeugs erfolgt. Das Master-Fahrzeug "treibt" beispielsweise das Slave-Fahrzeug vor sich her, über seine Frontsensorik wird kontinuierlich der Abstand zwischen den beiden Fahrzeugen ermittelt, wie auch die entsprechende Relativgeschwindigkeit, wie auch die Ist-Geschwindigkeit des Zielfahrzeugs als auch die Eigengeschwindigkeit. Hierüber ist es möglich, definierte Ausgangsverhältnisse zu schaffen, die Voraussetzung respektive Ausgangsparameter für einen Test sind, wie auch kontinuierlich die dem Testszenario unterliegende nachfolgende Verzögerung des Slave-Fahrzeugs hierüber kontinuierlich ermittelt wird etc.

Als fahrzeugeigene Sensoren können beliebige Sensoren wie Videokamera, Frontsensoren etc. wie ausgeführt verwendet werden. Alternativ oder zusätzlich ist es aber auch denkbar, Referenzsensoren, die fahrzeugextern lokal beispielsweise an entsprechenden Messmasten verbaut sind, zu nutzen, beispielsweise im Rahmen einer DGPS-Steuerung (DGPS = Digital Global Positioning System), umfassend eine lokale, feststehende Basisstation nebst entsprechenden Sensoriken in beiden Fahrzeugen, wobei die Basisstation aus den Sensorsignalen der Fahrzeuge entsprechende Geschwindigkeits- und Abstandsdaten etc ermittelt, die wiederum an das Testfahrzeug gegeben werden, das diese dann als Steuersignale umsetzt und weiterleitet.

Zweckmäßigerweise kommunizieren beide Kraftfahrzeuge über eine bidirektionale Kommunikation miteinander, das heißt, beide Fahrzeuge respektive die entsprechenden Steuergeräte, die zentral für die Durchführung des Test in den jeweiligen Fahrzeugen vorgesehen sind, tauschen sich ständig über ein definiertes Protokoll aus, so dass stets beidseits bekannt ist, welche internen Zustände aktuell vorliegen, damit der gesamte Vorgang überwachbar und diagnostizierbar bleibt.

Das Testfahrzeug steuert das Zielfahrzeug wie bereits beschrieben bevorzugt hinsichtlich des Beschleunigungs- oder Bremsverhaltens sowie des Lenkverhaltens. Durch Steuerung des Beschleunigungs- oder Bremsverhaltens kann beispielsweise die Funktionsfähigkeit eines Folgesystems wie des eingangs beschriebenen ACC-Systems getestet werden, inwieweit dieses beispielsweise bei einer Beschleunigung des vorausfahrenden Fahrzeugs die Fahrzeugverfolgung ansteuert, oder im Falle einer Verzögerung den eigenen Bremseingriff ansteuert. Auch kann bei einer starken Verzögerung der Bremsassistent, also das AEB-System, getestet werden, oder das Kollisionswarnsystem, also das eingangs beschriebene FCW-System etc. Auch über die Steuerung des Lenkverhaltens kann beispielsweise die Funktionalität des FCW- und des AEB-Systems getestet werden, indem beispielsweise ein Einschervorgang des Zielfahrzeugs vor das Testfahrzeug simuliert wird etc. Aber auch Szenarien mit sich von hinten annäherndem Zielfahrzeug, beispielsweise zum Testen eines Spurwechselassistenzsystems, das versucht, den toten Winkel zu vermeiden, indem ein herannäherndes Fahrzeug erfasst wird und bei einem beabsichtigten eigenen Spurwechsel ein Warnsignal gibt, können getestet werden, indem das Zielfahrzeug so angesteuert wird, dass es sich dem Testfahrzeug auf einer seitlich versetzten Spur annähert etc.

In Weiterbildung der Erfindung kann vorgesehen sein, dass das Testfahrzeug das Zielfahrzeug derart steuert, dass zunächst durch die Gabe von Steuersignalen ein definierter, über Sensoren erfasster Fahrzustand des Zielfahrzeugs relativ zum Testfahrzeug hinsichtlich der jeweiligen Ist-Geschwindigkeit, der Relativ-Geschwindigkeit, des Abstands und/oder der Relativ-Position erreicht wird, wonach die der Durchführung des Fahrmanövers dienenden Steuersignale gegeben werden. Das Testfahrzeug steuert vor der Durchführung des eigentlichen Testszenarios, wenn also das definierte Fahrmanöver abgefahren wird, das Zielfahrzeug zunächst derart an, dass das Zielfahrzeug bestimmte Fahrparameter einnimmt, also eine bestimmte Ist-Geschwindigkeit fährt, oder einen bestimmten vorgegebenen Abstand zum Testfahrzeug einnimmt, wie natürlich auch das eigene Testfahrzeug so angesteuert wird, dass bestimmte Parameter wie Ist-Geschwindigkeit und Ähnliches eingehalten werden. Es werden also die Randbedingungen, die die Testvorgabe vorgibt und definiert, eingeregelt. Erst dann beginnt der eigentliche Test mit Gabe der Teststeuersignale.

Aus Sicherheitsgründen ist es zweckmäßig, wenn seitens des Zielfahrzeugs eine Plausibilitätsprüfung der empfangenen Steuersignale vorgenommen wird, deren Umsetzung in Abhängigkeit des Prüfungsergebnisses folgt. Hierüber wird seitens des Zielfahrzeugs sichergestellt, dass keine "unsinnigen" Steuerdaten abgearbeitet werden, um etwaige Unfälle oder sonstige Gefahrensituationen zu vermeiden.

Die Ergebnisinformationen, also die Erfassung des Verhaltens des Fahrerassistenzsystems respektive der hierüber eingebundenen Sensoriken bzw. Aktuatoriken etc., betreffend den Test werden mit im Testfahrzeug vorgesehenen Sensoren oder mittels externer Sensoren, die von den Kraftfahrzeugen gelieferte Positionsdaten erfassen und verarbeiten, ermittelt. Das heißt, dass das Testfahrzeug selbst eine Eigendiagnose vornehmen kann, denkbar ist aber auch, über die bereits vorstehend beschriebene DGPS-Einrichtung entsprechende Ergebnisse zu erfassen, also das Verzögerungsverhalten etc. hierüber bestimmen zu lassen. In diesem Fall wird eine Referenzsensorik eingebunden, die gegebenenfalls zu einer Verbesserung der Auswertegenauigkeit führt.

Die Steuerung durch das Testfahrzeug zur Durchführung des Fahrmanövers kann in Weiterbildung der Erfindung erst nach Gabe eines Freigabesignals durch den Fahrer des Zielfahrzeugs möglich sein, wobei vorzugsweise dem Fahrer des Zielfahrzeugs über eine Statusanzeige angezeigt wird, ob ein gegebenenfalls für die Durchführung des Fahrmanövers benötigter Fahrzustand hinreichend stabil erreicht ist. Demgemäß erfolgt also der echte Test erst, wenn der Fahrer des Zielfahrzeugs ein Freigabesignal gibt, mithin, wenn also hierüber sichergestellt ist, dass auch der Fahrer, der in jedem Fall und zu jedem Zeitpunkt stets die Übernahmehoheit besitzt, den Test freigibt. Hierzu ist es denkbar, dem Fahrer eine Statusanzeige, beispielsweise in Form eines Farbsignals oder dergleichen, zu geben, über welche angezeigt wird, dass die Ausgangsparameter, die dem Test zugrunde liegen (z. B. Ist-Geschwindigkeit, Relativabstand etc.) hinreichend lange, beispielsweise für 5 - 10 Sekunden stabil eingehalten sind, so dass er weiß, dass die Test-Rahmenbedingungen erfüllt sind und der Test ordnungsgemäß vonstatten gehen kann.

Wie bereits beschrieben, besitzt der Fahrer des Zielfahrzeugs zu jedem Zeitpunkt die Übernahmehoheit über sein eigenes Fahrzeug. Jede Betätigung des Fahrpedals, des Bremspedals oder des Lenkrads während der Steuerung des Zielfahrzeugs durch das Testfahrzeug führt zum unmittelbaren Abbruch der Fremdsteuerung. Entsprechendes kann auch für den Fahrer des Testfahrzeugs gelten, das heißt, dass auch dieser stets die Übernahmehoheit hat.

Neben dem Verfahren betrifft die Erfindung ferner eine Testvorrichtung zum Testen der Funktionsfähigkeit eines Fahrerassistenzsystems, umfassend ein Testfahrzeug mit einem verbauten, zu testenden Fahrerassistenzsystem, sowie ein Zielfahrzeug, wobei das Testfahrzeug mit dem Zielfahrzeug über eine drahtlose Kommunikationsverbindung zur Übertragung von Steuersignalen kommuniziert. Die Testvorrichtung ist zur Durchführung des beschriebenen Verfahrens ausgebildet.

Beide Fahrzeuge kommunizieren hierbei bevorzugt bidirektional, das heißt, dass sie jeweils eine Sende- und Empfangseinrichtung für einen bidirektionalen Signaltransfer aufweisen.

Üblicherweise sind in einem Fahrzeug unterschiedliche Bus-Systeme verbaut, an denen unterschiedliche Steuergeräte mit zugeordneten Aktuatoriken und Sensoren hängen. Auf jeden Bus werden die Signale mit einer bestimmten Botschafts- und Signalstruktur kommuniziert. Um die Steuersignale busspezifisch aufbereiten zu können, sieht das Zielfahrzeug zweckmäßigerweise einen Signalumsetzer vor, der die aktuatorspezifischen Steuersignale, die vom Testfahrzeug gegeben werden und der Ansteuerung bestimmter Aktuatoren dienen, in die erforderliche busspezifische Signalstruktur des Zielfahrzeugs umsetzt. Dies ist erforderlich, damit die busspezifischen Steuergeräte die ihnen zugeordneten Signale tatsächlich als solche erkennen und verarbeiten können.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer Testvorrichtung einer ersten Ausführungsform, und
- Fig. 2: eine Prinzipdarstellung einer Testvorrichtung einer zweiten Ausführungsform.

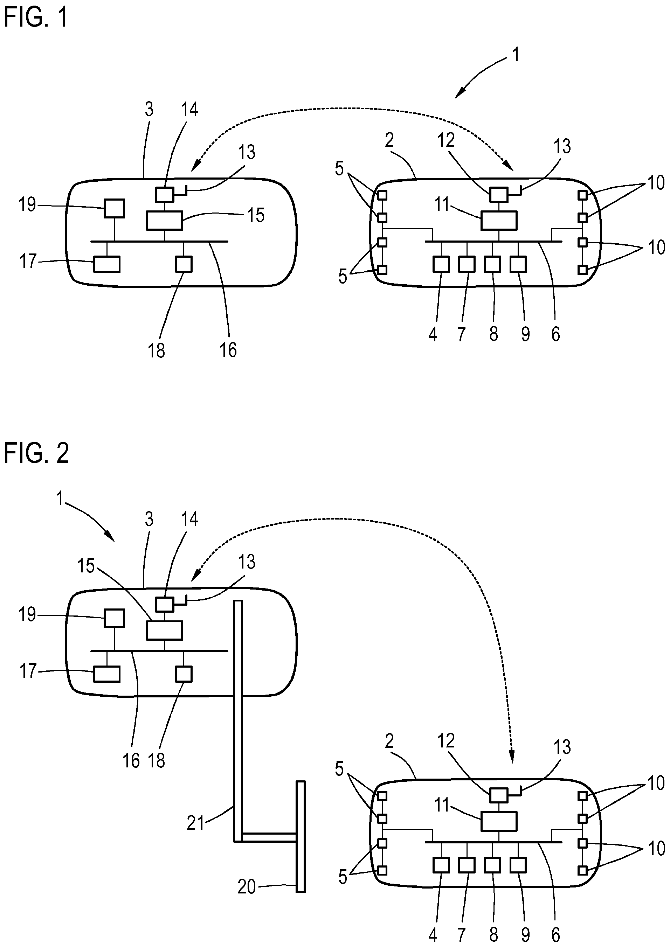

Fig. 1 zeigt eine erfindungsgemäße Testvorrichtung 1, die zur Durchführung des erfindungsgemäßen Verfahrens geeignet ist. Vorgesehen ist ein Testfahrzeug 2 sowie ein Zielfahrzeug 3. Im Testfahrzeug 2 ist ein zu testendes Fahrerassistenzsystem installiert, beispielsweise ein FCW-System, also ein Kollisionserfassungssystem. Dieses ist in seiner Funktionalität einerseits softwaretechnisch in einem geeigneten Systemsteuergerät 4 abgebildet, zum anderen umfasst es die Sensorsignale diverser Sensoren 5, hier von Frontsensoren wie beispielsweise Ultraschall- oder Radarsensoren. Das Steuergerät 4 hängt an einem Fahrzeugbus 6, an dem im gezeigten Beispiel noch weitere Steuergeräte 7, 8, 9 sowie deren, nicht näher gezeigte, zugeordnete Aktoriken oder Sensoriken etc. hängen. Im gezeigten Beispiel sind ferner weitere Hecksensoren 10 vorgesehen, die anderen Fahrerassistenzsystemen wie beispielsweise einem Spurwechselassistenzsystem zugeordnet sind.

Die Testvorrichtung 1 umfasst ferner einen im Testfahrzeug 2 installierten Steuerrechner 11, der mit dem Bus 6 kommuniziert und von dort die relevanten, für seine Steueraufgaben erforderlichen Daten in Form von Sensorsignalen etc. abgreift. Ihm zugeordnet ist eine Sende- und Empfangseinrichtung 12 nebst zugeordneter Sendeantenne 13, die für einen drahtlosen, bidirektionalen Datentransfer zum Zielfahrzeug 3 vorgesehen ist.

Das Zielfahrzeug 3 seinerseits umfasst ebenfalls eine kombinierte Sende- und Empfangseinrichtung 14, der ein Umsetzer 15 nachgeschaltet ist. Dieser ist in der Lage, die vom Testfahrzeug 2 übertragenen Steuersignale, die dem Betrieb respektive der Steuerung von im Zielfahrzeug 3 verbauten Aktuatoren dient, entsprechend in die Botschaft- und Signalstruktur eines Busses 16 (im gezeigten Beispiel ist nur ein Bus gezeigt) umzusetzen, so dass die mehreren aktuatorikspezifischen Steuergeräte 17, 18, 19, die an dem Bus 16 hängen, die entsprechenden Steuersignale in der korrekten Form empfangen. Natürlich können noch mehr als drei Steuergeräte eingebunden sein.

Die Steuersignale dienen dazu, diese Aktuatoriken entsprechend anzusteuern. Sie sind dergestalt, dass mit ihnen ein ganz bestimmter, definierter Fahrbetrieb und damit ein definiertes Fahrmanöver seitens des Zielfahrzeugs 3 vorgenommen werden kann. Beispielsweise handelt es sich bei dem Steuergerät 17 um ein Motorsteuergerät, über das der Motor des Zielfahrzeugs 3 gesteuert wird, um hierüber die Ist-Geschwindigkeit einzustellen. Das Steuergerät 18 steuert beispielsweise das Bremssystem, um eine gezielte Verzögerung vorzunehmen, bis hin zu einer Vollbremsung, während das Steuergerät 19 beispielsweise die Lenkaktuatorik steuert, um ein gezieltes Ausweich- oder Kurvenmanöver vorzunehmen, ohne dass der Fahrer, der selbstverständlich im Zielfahrzeug sitzt, hierzu tätig werden muss. Auch im Testfahrzeug sitzt selbstverständlich ein Fahrer, der während des Steuereingriffs jedoch ebenfalls nicht tätig werden muss.

Die Steuersignale, die das Testfahrzeug 2 an das Zielfahrzeug 3 schickt, werden unter Nutzung der Sensorik des Testfahrzeugs 2 generiert. Diese Sensoriken, beispielsweise die Sensoren 5, erfassen laufend beispielsweise den Abstand zum Zielfahrzeug 3, hieraus kann auch auf die Relativ-Geschwindigkeit wie auch die Ist-Geschwindigkeit des Zielfahrzeugs geschlossen werden etc. Das Testfahrzeug 2 kann auf diese Weise das Zielfahrzeug 3 quasi "vor sich herführen", und definierte Geschwindigkeits- und Abstandszustände einstellen, die beispielsweise Grundlage dafür sind, nachfolgend Steuersignale zu übertragen, die der Durchführung eines ganz bestimmten Fahrmanövers, beispielsweise eines starken Bremsvorgangs oder dergleichen, dienen. Selbstverständlich steuert der Steuerrechner 11 letztlich auch zumindest teilweise den Betrieb des Testfahrzeugs, da auch dieses ja bestimmte grundlegende Fahrparameter, beispielsweise eine definierte Ist-Geschwindigkeit, zur Durchführung des Assistenzsystemtests einnehmen muss.

Nachfolgend sei anhand eines Beispielfalls ein Testszenario sowie dessen erfindungsgemäße Umsetzung beschrieben.

Es sei angenommen, dass ein Kollisionsassistenzsystem, also ein FCW-System im Testfahrzeug 2 verbaut ist, das getestet werden soll. Die Testvorgabe für ein solches System sieht vor, dass beide Fahrzeuge 2, 3 für mindestens 5 Sekunden mit jeweils 72 km/h (± 1,6 km/h Toleranz) im Abstand von 30 m (± 2 m Toleranz) fahren. Sofern dieser Zustand konstant hergestellt ist, muss das vorausfahrende Fahrzeug in einer definierten Verzögerungsrampe von - 2 m/s³ auf - 3 m/s² verzögert werden und mit diesem Wert konstant weiterbremsen. Das Testfahrzeug 2, das als Masterfahrzeug im Vergleich zum Slave-Fahrzeug, also dem Zielfahrzeug 3, fungiert, muss dann mit einem warnenden Eingriff innerhalb eines definierten Zeitfensters auf die zunehmend kritischer werdende Situation reagiert werden, nachdem das Testfahrzeug 2 ohne Verzögerung immer näher auf das Zielfahrzeug 3 auffährt.

Das erfindungsgemäße Verfahren arbeitet in diesem Fall wie folgt:
a) Das Testfahrzeug 2 fährt hinter dem Zielfahrzeug 3 und aktiviert die "Fremdsteuerung" für das Zielfahrzeug 3, das heißt, dass seitens des Steuerrechners 11 der Fremdsteuerbetrieb aufgenommen wird, es wird eine Kommunikationsverbindung zum Zielfahrzeug 3 aufgebaut.
   Die "Fremdsteuerung" stützt sich auf die erfassten Daten im gezeigten Beispiel der Frontsensoren 5 des Testfahrzeugs 2. Die Position des Zielfahrzeugs 3 wird zyklisch erfasst und verarbeitet, das heißt, die Sensoren 5 erfassen kontinuierlich das Heck des Zielfahrzeugs 3. Mit Hilfe dieser Daten und auf Basis des eigenen Fahrzustands, der kontinuierlich vom Steuerrechner 11 über den Bus 6 abgegriffen wird, werden mit Hilfe einer Regelung die Steuerbefehle für das Zielfahrzeug 3 im Steuerrechner 11 generiert.
b) Die Regelung des Testfahrzeugs 2, also des Steuerrechners 11 ist nun in der Lage, das Zielfahrzeug 3 in einem online verstellbaren oder fest voreingestellten Abstands-, Relativgeschwindigkeits- oder Zeitlücken-Fensters vorneweg fahren zu lassen, das heißt, das Testfahrzeug 2 "schiebt" das Zielfahrzeug 3 vor sich her. Im Beispielfall sieht die Regelung derart aus, dass das Zielfahrzeug 3 auf Basis einer Zeitlückenregelung vom Testfahrzeug 2 fremdgesteuert wird, wobei die Zeitlückenregelung so appliziert wird, dass bei einer ReferenzGeschwindigkeit von 72 km/h (entsprechend 20 m/s) ein Abstandswert von genau 30 m eingehalten wird. Das heißt, die Soll-Zeitlücke für die Regelstrategie beträgt 1,5 s.
   Der Steuerrechner 11 im Testfahrzeug 2 stellt als Steuersignale für die "Fremdsteuerung" des Zielfahrzeugs 3 beispielhaft folgende Größen zur Verfügung: Bremsmoment oder Verzögerungssollwert für das Bremssystem des Zielfahrzeugs 3, Antriebsmoment oder Beschleunigungssollwert für das Motorsystem des Zielfahrzeugs 3, ein Lenkmoment oder einen Lenkwinkel für das Lenksystem des Zielfahrzeugs 3, gegebenenfalls Steuersignale für die etwaige vorgesehene Parkbremse des Zielfahrzeugs 3, Steuersignale für das Getriebe des Zielfahrzeugs 3 oder das Kombiinstrument etc.
c) Die notwendigen Steuersignale, um das Zielfahrzeug 3 nach den Wünschen des Master-Testfahrzeugs 2 fahren zu lassen, werden über die drahtlose Schnittstelle, hier also die Sende- und Empfangseinrichtung 12 nebst Antenne 13, an die Sende- und Empfangseinrichtung 14 des Zielfahrzeugs 3 übermittelt, wie durch den Doppelpfeil in Fig. 1 gezeigt. Zusätzlich werden Statussignale übermittelt, die zur Kommunikationsüberwachung und -prüfung dienen.
d) Werden im Zielfahrzeug 3 plausible Steuersignale empfangen (das heißt, dass seitens der Sende- und Empfangseinrichtung 14 oder des Umsetzers 15 eine Plausibilitätsprüfung vorgenommen wird), so werden diese an die entsprechenden Fahrzeug-Steuergeräte 17, 18, 19, je nachdem, welche Systeme nachfolgend eingebunden sind, weitergeleitet und von dort aus funktional mit Hilfe der zugeordneten Aktuatorikkomponenten verarbeitet, so dass die gewünschte Systemreaktion erfolgt. Die Steuergeräte sind beispielsweise das Steuergerät des ESP (ESP = elektronische Stabilitätsprogramm), des Motors, des Bremssystems etc. zugeordnet. Die Anbindung an den Bus 16 erfolgt über den Umsetzer 15 (Bypassing-Anbindung), der die notwendigen Steuersignale innerhalb der korrekten Botschafts- und Signalstruktur auf das Bus-System 16 abbildet, damit sie von den Empfänger-Steuergeräten entsprechend verarbeitet und umgesetzt werden können.
e) Im hier geschilderten Fall wird der Zustand eingeregelt, dass, sofern das Testfahrzeug 72 km/h fährt, das Zielfahrzeug mit der gleichen Geschwindigkeit und einem konstanten Abstand von 30 m vorneweg fährt. Aus diesem reproduzierbar darstellbaren Zustand heraus können seitens des Master-Testfahrzeugs 2 nun beliebige, voreingestellte Verzögerungsprofile Richtung Zielfahrzeug 3 übermittelt werden, so dass das gewünschte Testszenario ablaufen kann.
   Im vorliegenden Fall übermittelt das Testfahrzeug 2 folglich Steuersignale, die eine Verzögerungsrampe von - 2m/s³ auf einen Verzögerungswert von - 3m/s² definieren, was sodann seitens des Steuergeräts 18 empfangen und über die entsprechenden zugeordneten Aktuatoren umgesetzt wird. Das heißt, dass das Zielfahrzeug 3 definitiv, den Testvorgaben entsprechend bremst.
f) Das Testfahrzeug 2 und das Zielfahrzeug 3 tauschen dabei ständig über ein definiertes Protokoll interne Zustände aus, so dass stets beidseits aktuell ein jeweiliger Status bekannt ist und der Vorgang überwachbar und diagnostizerbar bleibt.
g) Der Fahrer im Zielfahrzeug 3 muss folglich das Testmanöver selbst nicht mehr fahren, er bleibt jedoch die notwendige Sicherheitsinstanz. Das heißt, er muss die Fremdsteuerung seines Fahrzeugs freigeben, beispielsweise zu Beginn der "Übernahme" durch das Testfahrzeug 2, um bereits den Ausgangszustand (72 km/h konstant bei konstantem Abstand von 30 m) einzuregeln, wie auch insbesondere, um die eigentlichen Test-Steuersignale (hier also der Verzögerungsrampe) zu übertragen. Diese Signalübertragung kann beispielsweise erst dann erfolgen, wenn der Fahrer ein Freigabesignal gegeben hat, das über die drahtlose Schnittstelle des Zielfahrzeugs 3 übertragen wird, nachdem ihm dieser stationäre, stabile Zustand für eine gewisse Zeit signalisiert wurde. Der Fahrer kann die Freigabe aber auch jederzeit wieder rückgängig machen und somit die Fahrzeugführung wieder komplett selbst übernehmen. Dies geschieht ohnehin bei jedem aktiven Fahrereingriff am Bremspedal, Gaspedal und der Lenkung.

Die Übertragung der Daten über die bidirektionale Datenkommunikationsverbindung kann beispielsweise auf WLAN-Basis erfolgen. Selbstverständlich sind aber auch andere Kommunikationsmodi denkbar.

Anstelle der alleinigen Ermittlung der Steuersignale im Steuerrechner 11 ist es alternativ auch denkbar, eine Referenzsensorik in die Testvorrichtung 1 einzubinden. Hierzu ist ein nicht näher gezeigter Mast mit einer entsprechenden Messsensorik vorgesehen, die mit den beiden Fahrzeugen kommuniziert, die kontinuierlich ihre Positionsdaten übertragen. Das heißt, dass ein DGPS-System vorgesehen ist. Die seitens der externen Basisstation ermittelten Daten können an den Steuerrechner 11 geliefert werden, der diese dann als Steuersignale umsetzt respektive hieraus die Steuersignale gewinnt. Das heißt, dass eine externe Referenzsensorik verwendet wird. Dies ist jedoch nicht zwingend erforderlich.

Insgesamt kann also auf die beschriebene Weise eine hochgenaue Testdurchführung gewährleistet werden, das heißt, dass das Fahrmanöver äußerst exakt vonstatten geht, immer nur bei ganz bestimmten, definierten Randbedingungen abläuft und immer nur mit ganz bestimmten, vordefinierten Manöverparametern erfolgt, ohne dass es hierzu irgendwelcher gravierender Fahrerhandlungen bedarf.

Fig. 2 zeigt eine vergleichbare Testvorrichtung 1, wobei für gleiche Bauteile gleiche Bezugszeichen verwendet sind.

Anders als bei der Testvorrichtung 1 aus Fig. 1 ist hier ein crashbarer Zielsimulator 20 vorgesehen, der an einem Träger 21 des Zielfahrzeugs 3 angeordnet ist. Hier fungiert also das Zielfahrzeug 3 als Trägerfahrzeug für den Zielsimulator 20. Diese Ausgestaltung ist bei Funktionstests, bei denen das Testfahrzeug 2 mit dem Zielsimulator kollidieren muss, vorgesehen.

Die Funktionsweise auch dieser Testvorrichtung 1 ist jedoch die gleiche wie bezüglich Fig. 1 beschrieben.

## Patentansprüche

1. Verfahren zum Testen der Funktionsfähigkeit eines in einem Testkraftfahrzeug (2) verbauten Fahrerassistenzsystems, das in Abhängigkeit von von Sensoren, die ein in der Umgebung des zu testenden, fahrenden Testkraftfahrzeugs (2) fahrendes Zielkraftfahrzeug (3) erfassen, gelieferten Informationen arbeitet, insbesondere eines in die Längs- oder Querführung des Testkraftfahrzeugs (2) eingreifenden Fahrerassistenzsystems,
**dadurch gekennzeichnet,**
**dass** das Testkraftfahrzeug (2) den Betrieb des Zielkraftfahrzeugs (3) zur gezielten Durchführung wenigstens eines definierten Fahrmanövers durch Gabe von Steuersignalen über eine drahtlose Kommunikationsverbindung zumindest teilweise steuert.

2. Verfahren nach Anspruch 1,
**dadurch gekennzeichnet,**
**dass** die Steuersignale in Abhängigkeit von Erfassungssignalen von im Testkraftfahrzeug (2) vorgesehenen Sensoren (5, 10), die das Zielkraftfahrzeug (3) erfassen oder von externen Sensoren, die von den Kraftfahrzeugen (2, 3) gelieferte Positionsdaten erfassen und verarbeiten, ermittelt werden.

3. Verfahren nach Anspruch 1 oder 2,
**dadurch gekennzeichnet,**
**dass** beide Kraftfahrzeuge (2, 3) über eine bidirektionale Kommunikationsverbindung miteinander kommunizieren.

4. Verfahren nach einem der vorangehenden Ansprüche,
**dadurch gekennzeichnet,**
**dass** das Testkraftfahrzeug (2) das Zielkraftfahrzeug (3) hinsichtlich des Beschleunigungs- oder Bremsverhaltens oder des Lenkverhaltens steuert.

5. Verfahren nach einem der vorangehenden Ansprüche,
**dadurch gekennzeichnet,**
**dass** das Testkraftfahrzeug (2) das Zielkraftfahrzeug (3) derart steuert, dass zunächst durch Gabe von Steuersignalen ein definierter, über Sensoren erfasster Fahrzustand des Zielkraftfahrzeugs (3) relativ zum Testkraftfahrzeug (2) hinsichtlich der jeweiligen Ist-Geschwindigkeit, der Relativ-Geschwindigkeit, des Abstands und/oder der Relativ-Position erreicht wird, wonach die der Durchführung des Fahrmanövers dienenden Steuersignale gegeben werden.

6. Verfahren nach einem der vorangehenden Ansprüche,
**dadurch gekennzeichnet,**
**dass** seitens des Zielkraftfahrzeugs (3) eine Plausibilitätsprüfung der empfangenen Steuersignale vorgenommen wird, deren Umsetzung in Abhängigkeit des Prüfungsergebnisses erfolgt.

7. Verfahren nach einem der vorangehenden Ansprüche,
**dadurch gekennzeichnet,**
**dass** Ergebnisinformationen betreffend den Test mit im Testkraftfahrzeug (2) vorgesehenen Sensoren oder mittels externer Sensoren, die von den Kraftfahrzeugen (2, 3) gelieferte Positionsdaten erfassen und verarbeiten, ermittelt werden.

8. Verfahren nach einem der vorangehenden Ansprüche,
**dadurch gekennzeichnet,**
**dass** die Steuerung durch das Testkraftfahrzeug (2) zur Durchführung des Fahrmanövers erst nach Gabe eines Freigabesignals durch den Fahrer des Zielkraftfahrzeugs (3) möglich ist, wobei vorzugsweise dem Fahrer des Zielkraftfahrzeugs (3) über eine Statusanzeige angezeigt wird, ob ein gegebenenfalls für die Durchführung des Fahrmanövers benötigter Fahrzustand hinreichend stabil erreicht ist.

9. Verfahren nach einem der vorangehenden Ansprüche,
**dadurch gekennzeichnet,**
**dass** eine Betätigung des Fahrpedals, des Bremspedals oder des Lenkrads durch den Fahrer des Zielkraftfahrzeugs (3) und/oder des Testkraftfahrzeugs (2) während der Steuerung des Zielkraftfahrzeugs (3) durch das Testkraftfahrzeug (2) zum unmittelbaren Abbruch der Steuerung durch das Testkraftfahrzeug (2) führt.

10. Testvorrichtung zum Testen der Funktionsfähigkeit eines Fahrerassistenzsystems, umfassend ein Testkraftfahrzeug (2) mit dem verbauten, zu testenden Fahrerassistenzsystem, sowie ein Zielkraftfahrzeug (3), wobei des Testkraftfahrzeug (2) mit dem Zielkraftfahrzeug (3) über eine drahtlose Kommunikationsverbindung zur Übertragung von Steuersignalen kommuniziert, ausgebildet zur Durchführung des Verfahrens nach einem der vorangehenden Ansprüche.

11. Testvorrichtung nach Anspruch 10,
**dadurch gekennzeichnet,**
**dass** beide Fahrzeuge (2, 3) eine Sende- und Empfangseinrichtung (12, 14) für einen bidirektionalen Signaltransfer aufweisen.

12. Testvorrichtung nach Anspruch 10 oder 11,
**dadurch gekennzeichnet,**
**dass** das Zielkraftfahrzeug (3) einen Signalumsetzer (15) aufweist, der die aktuatorspezifischen Steuersignale in die erforderliche busspezifische Signalstruktur des Zielkraftfahrzeugs (3) umsetzt.

## Claims

1. Method for testing the functionality of a driver assistance system which is installed in a test motor vehicle (2) and which, in accordance with sensors which detect a target motor vehicle (3) which is travelling in the environment of the travelling test motor vehicle (2) which is intended to be tested, processes supplied information, in particular of a driver assistance system which intervenes in the longitudinal or transverse control of the test motor vehicle (2),
**characterised in that**
the test motor vehicle (2) at least partially controls the operation of the target motor vehicle (3) for selectively carrying out at least one defined driving manoeuvre by transmitting control signals via a wireless communication connection.

2. Method according to claim 1,
**characterised in that**
the control signals are established in accordance with detection signals from sensors (5, 10) which are provided in the test motor vehicle (2) and which detect the target motor vehicle (3) or by external sensors which detect and process position data supplied by the motor vehicles (2, 3).

3. Method according to claim 1 or 2,
**characterised in that**
both motor vehicles (2, 3) communicate with each other via a bi-directional communication connection.

4. Method according to any one of the preceding claims,
**characterised in that**
the test motor vehicle (2) controls the target motor vehicle (3) with respect to the acceleration or braking behaviour or the steering behaviour.

5. Method according to any one of the preceding claims,
**characterised in that**
the test motor vehicle (2) controls the target motor vehicle (3) in such a manner that firstly by transmitting control signals there is achieved a defined driving status of the target motor vehicle (3) which is detected by means of sensors relative to the test motor vehicle (2) with respect to the actual speed, the relative speed, the spacing and/or the relative position, according to which the control signals which serve to carry out the driving manoeuvre are transmitted.

6. Method according to any one of the preceding claims,
**characterised in that**
the target motor vehicle (3) carries out a plausibility test of the control signals which are received and which are implemented in accordance with the result of the test.

7. Method according to any one of the preceding claims,
**characterised in that**
result information relating to the test is established using sensors provided in the test motor vehicle (2) or by means of external sensors which detect and process position data supplied by the motor vehicles (2, 3).

8. Method according to any one of the preceding claims,
**characterised in that**
the control by the test motor vehicle (2) for carrying out the driving manoeuvre is possible only after transmission of a release signal by the driver of the target motor vehicle (3), wherein it is preferably indicated to the driver of the target motor vehicle (3) by means of a status display whether a driving status which may be required where applicable to carry out the driving manoeuvre has been achieved in a sufficiently stable manner.

9. Method according to any one of the preceding claims,
**characterised in that**
an actuation of the drive pedal, the brake pedal or the steering wheel by the driver of the target motor vehicle (3) and/or the test motor vehicle (2) during the control of the target motor vehicle (3) by the test motor vehicle (2) leads to direct termination of the control by the test motor vehicle (2).

10. Test device for testing the functionality of a driver assistance system, comprising a test motor vehicle (2) having the installed driver assistance system which is intended to be tested, and a target motor vehicle (3), wherein the test motor vehicle (2) communicates with the target motor vehicle (3) via a wireless communication connection in order to transmit control signals, which test device is constructed to carry out the method according to any one of the preceding claims.

11. Test device according to claim 10,
**characterised in that**
both vehicles (2, 3) have a transmission and receiving device (12, 14) for a bidirectional signal transfer.

12. Test device according to claim 10 or 11,
**characterised in that**
the target motor vehicle (3) has a signal converter (15) which converts the actuator-specific control signals into the required bus-specific signal structure of the target motor vehicle (3).

## Revendications

1. Procédé pour tester le bon fonctionnement d'un système d'assistance au conducteur qui est intégré dans un véhicule automobile d'essai (2) et qui travaille en fonction d'informations fournies par des capteurs qui détectent un véhicule automobile cible (3) roulant dans l'environnement du véhicule automobile d'essai (2) roulant, à tester, en particulier d'un système d'assistance au conducteur intervenant dans le guidage longitudinal ou transversal du véhicule automobile d'essai (2),
**caractérisé en ce**
**que** le véhicule automobile d'essai (2) commande au moins en partie le fonctionnement du véhicule automobile cible (3) pour l'exécution ciblée d'au moins une manoeuvre de conduite définie par la mise à disposition des signaux de commande par l'intermédiaire d'une liaison de communication sans fil.

2. Procédé selon la revendication 1,
**caractérisé en ce**
**que** les signaux de commande sont déterminés en fonction de signaux de détection de capteurs (5, 10) qui sont prévus dans le véhicule automobile d'essai (2) et qui détectent le véhicule automobile cible (3) ou par des capteurs externes qui détectent et traitent des données de position fournies par les véhicules automobiles (2, 3).

3. Procédé selon la revendication 1 ou 2,
**caractérisé en ce**
**que** les deux véhicules automobiles (2, 3) communiquent entre eux par l'intermédiaire d'une liaison de communication bidirectionnelle.

4. Procédé selon l'une des revendications précédentes,
**caractérisé en ce**
**que** le véhicule automobile d'essai (2) commande le véhicule automobile cible (3) quant au comportement d'accélération ou de freinage ou au comportement de direction.

5. Procédé selon l'une des revendications précédentes,
**caractérisé en ce**
**que** le véhicule automobile d'essai (2) commande le véhicule automobile cible (3) de telle sorte que, d'abord, un état de conduite défini, détecté par des capteurs, du véhicule automobile cible (3) par rapport au véhicule automobile d'essai (2) soit atteint, quant à la vitesse réelle respective, à la vitesse relative, à la distance et/ou à la position relative, par la mise à disposition de signaux de commande, après quoi les signaux de commande servant à l'exécution de la manoeuvre de conduite sont donnés.

6. Procédé selon l'une des revendications précédentes,
**caractérisé en ce**
**que**, du côté du véhicule automobile cible (3), un contrôle de vraisemblance des signaux de commande reçus est effectué et leur mise en oeuvre s'effectue en fonction du résultat du contrôle.

7. Procédé selon l'une des revendications précédentes,
**caractérisé en ce**
**que** les informations de résultat concernant le test sont déterminées avec des capteurs prévus dans le véhicule automobile d'essai (2) ou au moyen de capteurs externes qui détectent et traitent des données de position fournies par les véhicules automobiles (2, 3).

8. Procédé selon l'une des revendications précédentes,
**caractérisé en ce**
**que** la commande par le véhicule automobile d'essai (2) pour l'exécution de la manoeuvre de conduite n'est possible qu'après la mise à disposition d'un signal d'autorisation par le conducteur du véhicule automobile cible (3), dans lequel le fait de savoir si un état de conduite éventuellement nécessaire pour l'exécution de la manoeuvre de conduite est atteint de manière suffisamment stable est indiqué de préférence au conducteur du véhicule automobile cible (3) par l'intermédiaire d'un indicateur de statut.

9. Procédé selon l'une des revendications précédentes,
**caractérisé en ce**
**qu'**un actionnement de la pédale d'accélérateur, de la pédale de frein ou du volant de direction par le conducteur du véhicule automobile cible (3) et/ou du véhicule automobile d'essai (2) pendant la commande du véhicule automobile cible (3) par le véhicule automobile d'essai (2) conduit à l'interruption immédiate de la commande par le véhicule automobile d'essai (2).

10. Dispositif de test pour tester le bon fonctionnement d'un système d'assistance au conducteur, comprenant un véhicule automobile d'essai (2) avec le système d'assistance au conducteur intégré à tester ainsi qu'un véhicule automobile cible (3), dans lequel le véhicule automobile d'essai (2) communique avec le véhicule automobile cible (3) par l'intermédiaire d'une liaison de communication sans fil pour la transmission de signaux de commande, lequel dispositif de test est conçu pour la mise en oeuvre du procédé selon l'une des revendications précédentes.

11. Dispositif de test selon la revendication 10,
**caractérisé en ce**
**que** les deux véhicules automobiles (2, 3) comportent un dispositif d'émission et de réception (12, 14) pour une transmission de signaux bidirectionnelle.

12. Dispositif de test selon la revendication 10 ou 11,
**caractérisé en ce**
**que** le véhicule automobile cible (3) comporte un convertisseur de signal (15) qui convertit les signaux de commande spécifiques aux actionneurs en structure de signal nécessaire, spécifique au bus, du véhicule automobile cible (3).
